# EUROPÄISCHE PATENTSCHRIFT

(11) **EP 0 481 043 B1**
(45) Veröffentlichungstag und Bekanntmachung des Hinweises auf die Patenterteilung: **14.09.1994**
(21) Anmeldenummer: 91908193.5
(22) Anmeldetag: 02.05.1991
(51) Int. Cl.: B60R 16/02

(54) **VERBUNDREGELSYSTEM FÜR KRAFTFAHRZEUGE**
SYSTEM WITH INTERCONNECTED CONTROLLERS FOR MOTOR VEHICLES
SYSTEME DE REGULATEURS CONNECTES ENTRE EUX-MEMES POUR VEHICULES A MOTEUR

(30) Priorität: 04.05.1990 DE 4014339; 07.05.1990 DE 4014561
(43) Veröffentlichungstag der Anmeldung: 22.04.1992
(73) Patentinhaber: ITT Automotive Europe GmbH, 60488 Frankfurt (DE)
(72) Erfinder: KLEIN, Hans-Christof, D-6234 Hattersheim (DE)
(86) Internationale Anmeldenummer: EP9100837
(87) Internationale Veröffentlichungsnummer: WO9117069

(56) Entgegenhaltungen:
- EP-A- 275 664
- DE-A- 3 520 225
- DE-A- 3 603 346
- DE-A- 3 705 297
- DE-C- 3 837 863
- AUTOMOBIL-INDUSTRIE, Nr. 5, 1989, Deutschland, Seiten 659-673; KLEIN: "PKW-ABV BREMSSYSTEME MIT WEITEREN INTEGRIERTEN FUNKTIONEN"
- PATENT ABSTRACTS OF JAPAN, Band 12, Nr. 247 (M-717)(3094), 13. Juli 1988 & JP-A-63 34213 (AKEBONO BRAKE IND. CO. LTD.) 13 Februar 1988
- ADVANCES IN INSTRUMENTATION, Band 34, Nr. 2, 1979, PITTSBURGH US, Seiten 73-85; SCHNELLE: "CONTINUOUS STABLE LINEAR ESTIMATION OF CHEMICAL PROCESS VARIABLES USING DETERMINISTIC INTERACTIVE DYNAMIC MODELS"
- AUTOMATISIERUNGSTECHNISCHE PRAXIS - ATP., Band 22, Nr. 4, April 1980, München, DE, Seiten 120-126; Eckelmann: "Erfahrungen mit einem Zustandsbeobachter für die Regelung von Destillationskolonnen"
- AUTOMATISIERUNGSTECHNIK - AT., Band 33, Nr. 7, Juli 1985, München, DE, Seiten 210-218; Lachmann: "Selbsteinstellende nichtlineare Regelalgorithmen für eine bestimmte Klasse nichtlinearer Prozesse"
- AUTOMATISIERUNGSTECHNIK - AT., Band 35, Nr. 6, 1987, München, DE, Seiten 250-254, Konigorski: "Entwurf robuster strukturbeschränkter Zustandsregelungen durch Polgebietsvorgabe mittels Straffunktionen"
- AUTOMATISIERUNGSTECHNIK - AT., Band 32, Nr. 3, März 1984, München, DE, Seiten 81-90,; Fromme et al.: "Selbsteinstellende Zustandsregler"

## Beschreibung

Die Erfindung bezieht sich auf ein Verbundregelsystem für Kraftfahrzeuge, das im wesentlichen besteht aus Sensoren, die (ABS-) Stellungen, Geschwindigkeiten, Schwingungsfrequenzen Zustandsgrößen wie und/oder Beschleunigungen von Fahrzeugteilen erfassen und elektrische Signale abgeben, und aus elektronischen Schaltkreisen, die die Sensorsignale auswerten und Steuersignale für Teil-Regelsysteme zur Blockierschutz- (ABS-) und/oder Antriebsschlupfregelung (ASR-), zur Fahrzeugniveau- und/oder Fahrwerksregelung und gegebenenfalls für weitere Regelkreise erzeugen.

Es sind bereits viele verschiedene Regelsysteme für Kraftfahrzeuge bekannt, beispielsweise ABS- und/oder ASR-Systeme, Fahrwerksregelungen oder Servolenkungen. Diese Systeme arbeiten in der Praxis recht zuverlässig, jedoch nicht optimal, da ein Fahrzeug sehr komplizierte Bewegungsabläufe erfährt, die nicht vollständig mathematisch beschrieben werden können. Deswegen stellt jedes Regelsystem einen Kompromiß dar.

Außerdem ist es bekannt, für das Fahrzeugverhalten rechnerische Modelle zu verwenden und diese Modelle in die Regelsysteme einzubeziehen. Die Verwendung eines solchen Modells bei einem aktiven Fahrwerk bzw. zur Spurführung hat H. Wallentowitz in seinem Vortrag bei der VII. Iff-Tagung vorgeschlagen. Dort ist auch der "Beobachter" als ein System beschrieben, bei dem "ein Regler mit berechneten Bewegungsgrößen versorgt wird" (in: Vortragsausdrucke der VII. Iff-Tagung, Braunschweig, Mai 1989).

In der Europäischen Patentanmeldung 0 275 664 ist eine Beobachtungskontrolleinrichtung für Aufhängungssysteme beschrieben, bei der ständig die Auswirkungen von weicher und harter Dämpfereinstellung berechnet werden und dann der jeweils günstigere Zustand eingestellt wird.

Ferner wurde bereits vorgeschlagen, blockiergeschützte Bremssysteme, die auf elektronische Datenverarbeitung beruhen, mit einem Antriebsschlupf- und einem Fahrwerksregelungssystem und mit weiteren Funktionen zu einer Verbundregelung zu vereinen (DE-Z: Klein, Hans-Christof: Pkw-ABV-Bremssysteme mit weiteren integrierten Funktionen; in: Automobil-Industrie, 5/89, S. 659-673). Die Mehrfachausnutzung von Komponenten, wie der Informations- bzw. Signalguellen der einzelnen Teil-Regelsysteme, läßt eine Verbesserung des Kosten-Nutzen-Verhältnisses erwarten. Die Abstimmung der einzelnen Teil-Regelsysteme untereinander ist jedoch mit Schwierigkeiten verbunden.

Aus der regelungstechnischen Fachliteratur (DE-Z Automatisierungstechnik 33, Juli 1985, Seiten 210 - 218, "Selbsteinstellende nichtlineare Regelalgorithmen für eine bestimmte Klasse nichtlinearer Prozesse", K.-H. Lachmann) ist es bereits bekannt, für eine bestimmte Klasse nichtlinearer Prozesse verschiedene nichtlineare Prozeßmodelle anzuwenden, die die Grundlage für den Entwurf nichtlinearer Regler darstellen. Dabei wird für die Beschreibung des nichtlinearen Verhaltens des zu regelnden Prozesses eine "black-box"-Darstellung gewählt. Es wird also nur das Eingangs-/Ausgangsverhalten des Prozesses analysiert, ohne die inneren physikalischen Gegebenheiten zu berücksichtigen. Für eine bestimmte Klasse nichtlinearer Prozesse mit eindeutigen Nichtlinearitäten werden auf dieser Basis Regelalgorithmen abgeleitet, die die in dem verwendeten nichtlinearen Prozeßmodell enthaltene Information für die Regelung nutzen. Die analysierten nichtlinearen Regelalgorithmen sind für einen Einsatz zur Selbsteinstellung von nichtlinearen Reglern oder als parameteradaptive Regler geeignet. Die Untersuchungen sind jedoch auf spezielle nichtlineare Prozesse beschränkt.

Der Erfindung liegt die Aufgabe zugrunde, ein Verbundregelsystem für Kraftfahrzeuge zu schaffen, das sich mit vergleichsweise geringem Aufwand realisieren läßt und das dennoch besonders wirkungsvoll ist. Zur Erzielung einer hohen Regelungsgüte ist eine schnelle Erfassung und Verarbeitung aller zur Verfügung stehenden Daten und eine ständige Anpassung an die jeweiligen Bedingungen erforderlich.

Es hat sich herausgestellt, daß diese Aufgabe durch das im Anspruch 1 beschriebene Verbundregelsystem gelöst werden kann. Dessen Besonderheiten bestehen darin, daß ein Zustandsbeobachter vorhanden ist, der Signale von den Sensoren und von den elektronischen Schaltkreisen erhält, auswertet und Signale an die elektronischen Schaltkreise abgibt, und der als interaktiver Zustandsbeobachter ausgebildet ist, welcher zu vorgegebenen Zeitpunkten Signale erzeugt, die kurzzeitig einen oder mehrere der Teil-Regelsysteme in einen definierten, den Fahrbetrieb des Fahrzeugs und die Fahrsicherheit nicht beeinträchtigenden Zustand versetzen, und der die während dieses Zustandes ermittelten Sensorsignale und Signaländerungen zur Bestimmung von Fahrzeugdaten auswertet, diese Fahrzeugdaten in einem Speicher als aktualisierte Daten ablegt und in die Signalauswertung durch den Zustandsbeobachter sowie in die durch die Teil-Regelsysteme ausgeführten Regelungen einbezieht.

Auf einige besonders vorteilhafte Ausführungsarten beziehen sich die beigefügten Unteransprüche.

Der Zustandsbeobachter des erfindungsgemäßen Verbundregelsystems wird zunächst mit den durch die konstruktive Auslegung des Fahrzeugs gegebenen Grunddaten, nämlich Fahrzeugkonstanten und Fahrzeugdaten, gefüttert. Im Laufe der Zeit paßt sich dann die Regelung durch vergleichende Beobachtungen von Fahrzeugreaktionen mit dem Ergebnis der Simulationsrechnungen im Zustandsbeobachter gewissermaßen der Wirklichkeit immer besser an.

Der Verbundregler kann beispielsweise, sofern es Fahr- und Verkehrssituation zulassen, Signale aussenden, die eine Betätigung von Vorderrad-oder Hinterradbremsen für sich allein bewirken. Auf diese Weise kann die Bremskonstante für jede Achse ermittelt werden. Die so gewonnenen Daten werden dann in den elektronischen Daten zum Erzeugen der Steuersignale einbezogen.

Ein weiteres Beispiel ist die Ermittlung der Eigenfrequenz von Vorder- oder Hinterachse, wozu der Zustandsbeobachter für eine kurze Zeitspanne den Schwingungsdämpfer auf extrem weich stellen muß. Der Meßwert wird dann gespeichert und den nachfolgenden Berechnungen zugrundegelegt.

Weiterhin ist es in einem Ausführungsbeispiel der Erfindung vorgesehen, daß der Zustandsbeobachter die Teil-Regelsysteme abhängig von den aktualisierten Fahrzeugkonstanten und Fahrzeugdaten koordiniert, z.B. die Schwingungsdämpfersymmetrie und den Nickausgleich beim Bremsen, den Wankausgleich bei der Kurvenfahrt usw. Beispielsweise werden beim Bremsen die Schwingungsdämpfer so eingestellt, daß möglichst keine Rückkopplung an die Bremse erfolgt, oder es wird eine Wankstabilisierung beim Einschlagen des Lenkrades, also bei einer Kurvenfahrt, durch die Dämpfereinstellung herbeigeführt.

Eine Erweiterung des erfindungsgemäßen Verbundregelsystems besteht darin, daß mit Schwingungsdämpfern, deren Beschleunigungen in vorgegebenen Stellungen mit Hilfe von je mindestens einem Sensor feststellbar sind, aus den Abständen der Zeitpunkte, bei denen die vertikale Radbeschleunigung gleich Null ist, die Anregungsfrequenz der Radaufhängung durch die Fahrbahn ermittelt wird. In Abhängigkeit von der Anregungsfrequenz kann dann die entsprechende optimale Schwingungsdämpfereinstellung (Schwingungsdämpferhärte) gewählt werden. Außerdem kann ein besonderes Signal abgegeben werden, wenn das Fahrzeug in ein Schlagloch gerät oder über eine Bodenwelle fährt. Dieses Signal, das nur 1 bit benötigt, kann zwischen den anderen Informationen gesendet und empfangen werden, d.h. als Unterbrechung der üblichen Routine. Dies ermöglicht eine extrem schnelle Reaktion, d.h. eine kurzfristige Verstellung der Schwingungsdämpferhärte.

Eine weitere vorteilhafte Weiterbildung der Erfindung sieht vor, daß das Verbundregelsystem aus der Häufigkeitsverteilung der Schwingungsdämpferstellungen innerhalb eines Zeitintervalls die mittlere Fahrzeughöhe über dem Boden ermittelt. Auf diese Weise läßt sich besonders einfach ein Stellsignal für ein Niveauregelungssystem gewinnen.

Nach einer anderen Ausführungsart des erfindungsgemäßen Regelsystems wird mit Hilfe mindestens eines Schwingungsdämpfers, bei dem die Beschleunigung des Dämpferkolbens gegenüber dem zugehörigen Dämpferzylinder in einer bestimmten Stellung sensiert wird, und mit Hilfe der zugehörigen elektronischen Schaltkreise, die Dämpfereinstellung als Zeitfunktion berechnet. Dabei ist es günstig, wenn die elektronischen Schaltkreise die Zeitfunktion der Stellungen des Schwingungsdämpfers zeitlich mitteln, um den stationären Wert der Einfederung des Schwingungsdämpfers festzustellen. Die maximale Stellung des Schwingungsdämpfers wird ermittelt und zur Berechnung einer gleitenden Mittelwertbildung von den elektronischen Schaltungen ausgewertet.

Die zur Ermittlung der Integrationskonstanten zur Verfügung stehenden Randbedingungen sind die Schwingungsdämpfereinstellungen, für die jeweils die Beschleunigung gemessen wird. Außerdem gilt grundsätzlich, daß die Beschleunigungsfunktion einen Extremwert hat, wenn die Geschwindigkeitsfunktion einen Nulldurchgang aufweist.

Schließlich ist es erfindungsgemäß noch vorgesehen, einen Zustandsbeobachter mit folgenden Elementen zu verwenden:
- einen inneren zentralen Controllerbus,
- einen internen, die internen Operationen steuernden Operationscontroller und einen externen, die Kommunikation mit den elektronischen Schaltkreisen der Teil-Regelsysteme steuernden Operationscontroller
- mindestens ein RAM als Datenpuffer und zum Ablegen der aktuellen Fahrzeugdaten,
- mindestens ein ROM für Fahrzeugbasisdaten, einfache Programme sowie eine Datenbank mit Expertenwissen und
- eine Einheit, die die Berechnung von Konstanten mit Hilfe eines einfachen Vier-Rad-Fahrzeug-Simulations-Modells ermöglicht.

Weitere Vorteile und Anwendungsmöglichkeiten der Erfindung gehen aus der folgenden Erläuterung eines Ausführungsbeispiels anhand der beigefügten Darstellungen hervor.

Es zeigen in schematischer Vereinfachung
Fig. 1 den prinzipiellen Aufbau und die Verbindung zwischen verschiedenen Elementen eines Verbundregelsystems nach der Erfindung,
Fig. 2 den inneren Aufbau eines Zustandsbeobachters des Regelsystems nach Fig. 1,
Fig. 3 ein Ausführungsbeispiel mit Ringbus und teilweise dezentraler Datenverarbeitung,
Fig. 4a ein Fahrzeugrad mit Schwingungsdämpfer und Datenfluß sowie
Fig. 4b eine der dezentralen Datenverarbeitungseinheiten.

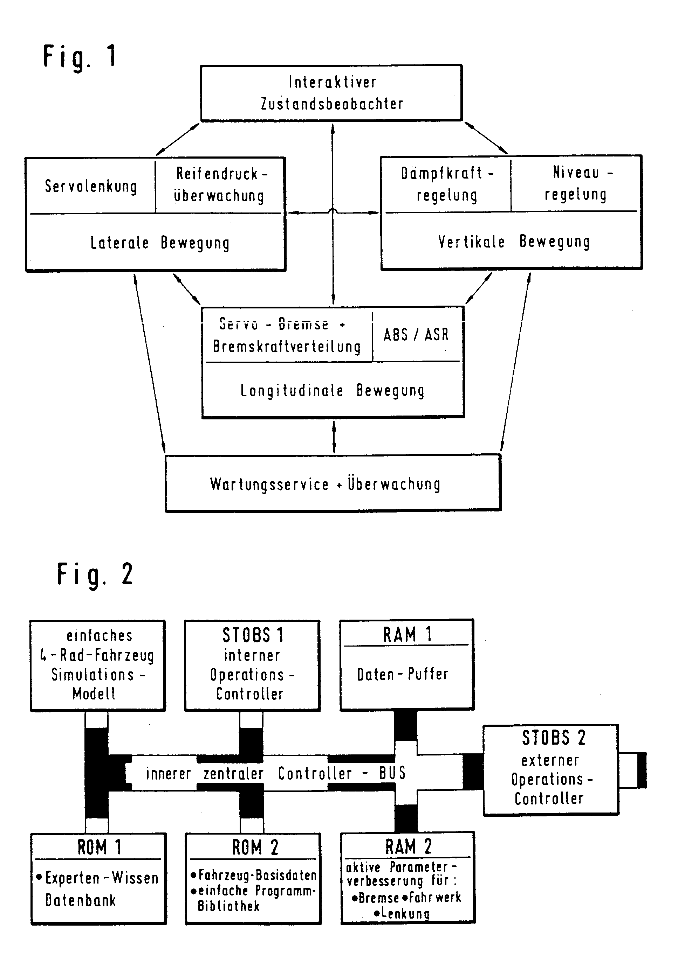

In Fig. 1 sind schematisch die Elemente eines Verbundregelsystems und die Verbindungen zwischen ihnen dargestellt. Ein interaktiver Zustandsbeobachter empfängt von den Teilsystemen, die laterale, longitudinale und vertikale Fahrzeugbewegungen regeln, Signale, und gibt an diese auch wieder Signale ab. Die lateralen Bewegungen werden etwa von einer Servolenkung oder von einer Reifendrucküberwachung kontrolliert bzw. beeinflußt. Servobremse, Bremskraftverteilung und ABS- bzw. ASR-Anlage kontrollieren und beeinflussen die longitudinale Bewegung; Kontrolle und Beeinflussung der vertikalen Bewegung erfolgt durch Dämpfkraft- oder Niveauregelung. Alle Systeme, die die drei Bewegungsarten regeln, tauschen auch untereinander und min einer weiteren Einheit, die einen Wartungsservice und eine zusätzliche Funktionsüberwachung beinhaltet, Daten aus.

Fig. 2 zeigt die wesentlichen Komponenten des Zustandsbeobachters. Die Kommunikation mit den elektronischen Schaltkreisen anderer Teilsysteme wird von dem mit STOBS 2 bezeichneten externen Operationscontroller gesteuert. Dieser ist durch einen internen, zentralen Controllerbus mit den anderen Teilen verbunden, der diese auch untereinander verbindet. Daten werden zunächst im Datenpuffer RAM 1 abgelegt. Weiterhin ist eine Datenbank mit Expertenwissen ROM 1 sowie - als ROM 2 bezeichnet - eine Datenbank mit Fahrzeugbasisdaten und eine Bibliothek mit einfachen Programmen vorhanden. Zur Steuerung der internen Operationen dient der interne Operationscontroller STOBS 1. Eine Einheit, in der ein einfaches Vier-Rad-Fahrzeug-Simulationsmodell gespeichert ist, ermittelt aus den in RAM 1 sowie ROM 1 und 2 abgelegten Informationen jeweils die aktuellen Fahrzeugkonstanten.

Letztere werden als aktive Parameterverbesserung für Bremse, Lenkung und Fahrwerk in RAM 2 abgelegt und diesen Systemen zur Ermittlung der Steuersignale zur Verfügung gestellt.

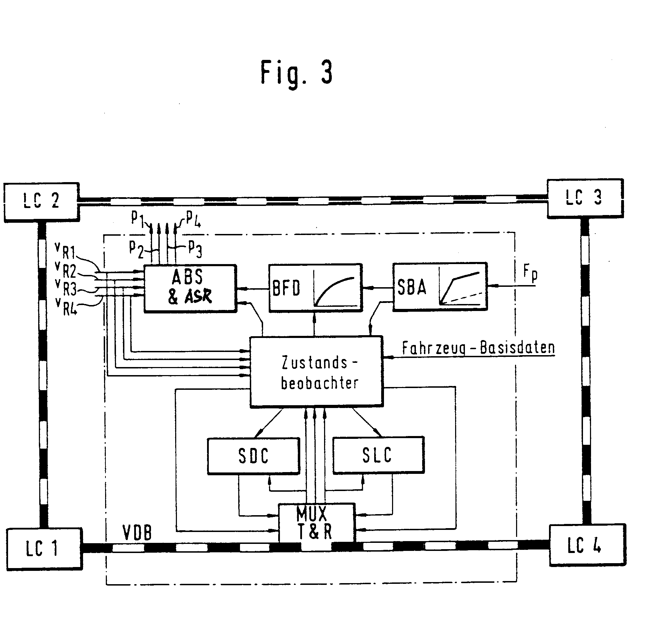

Im in Fig. 3 dargestellten Ausführungsbeispiel der Erfindung findet ein Teil der Datenverarbeitung dezentral statt. An einen Ringbus VDB sind die vier lokalen Controller LC 1 - 4 sowie die strichpunktiert angedeutete Zentraleinheit angeschlossen. Die Anschlüsse erfolgen jeweils über eine Multiplex-Übergabe und -Empfangseinheit MUX T&R. In Fig. 4b, die einen der lokalen Controller LC 1 - 4 darstellt, ist dieser Anschluß auch zu erkennen.

Die Zentraleinheit, deren Komponenten in Fig. 3 durch strichpunktierte Umrahmung markiert sind, umfaßt den Zustandsbeobachter einer Blockierschutz- und Antriebsschlupfkontrolleinheit ABS & ASR, eine Einheit zur Bremskraftverteilung BFD, eine Bremsbetätigungseinheit SBA, die mit der Pedalkraft Fp betätigt wird, ferner eine Einheit SDC zur Dämpfkraftregelung und eine Einheit SLC zur Regelunge von Fahrzeugwank- und -nickbewegungen und zur Regelung des Fahrzeugniveaus. Dem Zustandsbeobachter werden neben den Fahrzeugbasisdaten und den Drehgeschwindigkeiten der vier Räder _{VR1} bis _{VR4} auch die an der Multiplex-Übergabe- und -Empfangseinheit MUX T&R eingehenden Daten und der Zustand der Bremsbetätigungseinheit SBA mitgeteilt. Dies ist durch auf den Zustandsbeobachter weisende Pfeile dargestellt. Auch der Fluß der übrigen Daten ist durch Pfeile symbolisiert. Der Zustand der Bremsbetätigungseinheit SBA wird auch der Einheit zur Bremskraftverteilung BFD mitgeteilt, die gleichzeitig vom Zustadsbeobachter Informationen erhält. Von der Einheit zur Bremskraftverteilung BFD verläuft der Informationsfluß weiter zur ABS- und Schlupfkontrolleinheit ABS & ASR. Auch diese erhält zusätzlich Information vom Zustandsbeobachter. Von der ABS- und Antriebsschlupfregeleinheit ABS & ASR werden nach außen Steuersignale zur Regelung des Bremsdrucks _{P1} bis _{P4} in den nicht dargestellten Radbremsen abgegeben.

Der Zustandsbeobachter gibt weitere Signale direkt an die Multiplex-Übergabe- und -Empfangseinheit MUX T&R ab und an die Einheit zur Dämpfkraftregelung (Schwingungsdämpfereinstellung) SDC sowie die Einheit zur Regelung des Fahrzeugniveaus SLC. Die beiden letztgenannten Einheiten erhalten außerdem direkt Daten von der Multiplex-Übergabe- und -Empfangseinheit MUX T&R und geben direkt Daten an diese ab.

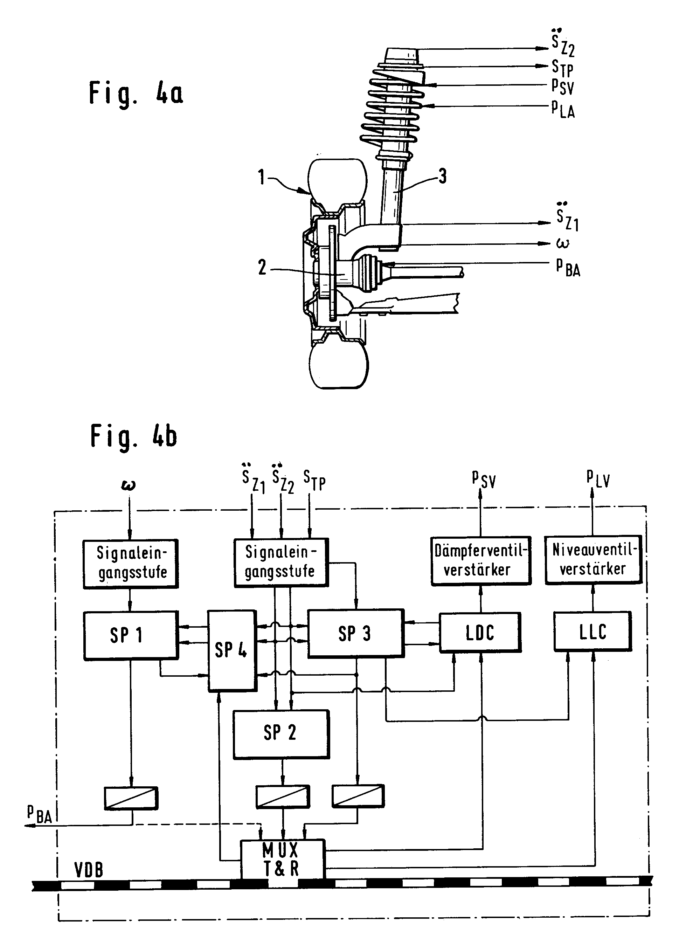

Fig. 4a zeigt ein Fahrzeugrad 1 mit einem an der Achse 2 angebrachten Federbein, das mit einem in seiner Härte verstellbaren Schwingungsdämpfer 3 und einer der Höhenverstellung dienenden Niveaueinstellvorrichtung ausgerüstet ist. Das in der Zeichnung gezeigte obere Ende des Federbeins ist an einem nicht gezeigten Fahrzeugaufbau befestigt. Sensoren ermitteln einige Größen des Fahrzeugrads 1 bzw. des Schwingungsdämpfers 3. Die Sensorsignale sind als Pfeile, die dem Signalfluß entsprechend vom Rad wegführen, symbolisiert. Es sind dies die Signale für die vertikale Aufbaubeschleunigung 8_{z2}, für einen bestimmten Schwellwert der Schwingungsdämpferstellung S_{TP}, die vertikale Radbeschleunigung S̈_{z1} und die Schwingungsfrequenz w des Schwingungsdämpfers 3. Zugeführt werden der in Fig. 4a dargestellten Einheit die Signale für den Bremsdruck pε_{A},für den Druck in der Niveaueinstellvorrichtung _{PLA}, um das Fahrzeugniveau einzustellen, und für die Härte des Schwingungsdämpfers pₛᵥ. Alle von der Einheit in Fig. 4a wegführenden und zu ihr hinführenden Signale werden über einen lokalen Controller, wie er in Fig. 4b gezeigt ist, gesteuert.

Dieser lokale Controller hat, wie oben erläutert, einen Anschluß (MUX T&R) an den Ringbus VDB. Informationen erhält der lokale Controller einerseits über Signaleingangsstufen und andererseits über die
Multiplex-Übergabe- und -Empfangseinheit MUX T&R. Diese Informationen werden entsprechend den Pfeilen den Funktionsblocks SP1 bis SP4, der lokalen Dämpfkraftregeleinheit LDC und der lokalen Niveauregeleinheit LLC zugeleitet und dort verarbeitet. Aufgaben und Funktionsweise der Blocks und Einheiten werden im folgenden kurz erläutert.

Der Block SP1 dient der Raddrehzahl- und Radgeschwindigkeitsermittlung und eliminiert durch Kreuzkorrelation die durch Radlastschwankungen hervorgerufenen Signaländerungen oder -störungen. Im Block SP2 werden die Beschleunigungssignale durch Bildung von Effektivwerten in kompakt übertragbare Größen umgewandelt. Außerdem wird bei Erkennen eines Schlaglochs ein 1-bit-Signal abgegeben. In der Stufe SP3 werden die momentanen Radaufstandskräfte ermittelt und der Block SP4 errechnet den kinematischen Reifenradius sowie die dynamische Änderung der Radaufstandskraft. Die Einheiten LDC und LLC generieren Stellsignale zur lokalen Einstellung der Schwingungsdämpferhärte pₛᵥ Niveauregelung.

## Patentansprüche

1. Verbundregelsystem für Kraftfahrzeuge, bestehend im wesentlichen aus
Sensoren, die Stellungen, Geschwindigkeiten, Schwingungsfrequenzen und/oder Beschleunigungen (S_{T}p, _{VR1}..._{VR4}, _{W}, S_{zi},S_{z2}) von Fahrzeugteilen erfassen und elektrische Signale abgeben, und
aus elektronischen Schaltkreisen (SP1,SP2,SP3,SP4; LDC,LLC), die die Sensorsignale auswerten und Steuersignale für Teil-Regelsysteme zur Blockierschutz- und/oder Antriebsschlupfregelung (ABS/ASR), zur Fahrzeugniveau- (SLC) und/oder Fahrwerksregelung (SDC) und ggf. für weitere Regelkreise (BFD) erzeugen,
dadurch gekennzeichnet, daß ein Zustandsbeobachter vorhanden ist, der Signale von den Sensoren (_{VR1}..._{VR4}) und von den elektronischen Schaltkreisen (SP1,SP2,SP3,SP4, LDC,LLC, SBA) erhält, auswertet und Signale an die elektronischen Schaltkreise (SP1,SP2,SP3,SP4, LDC,LLC) abgibt und als interaktiver Zustandsbeobachter ausgebildet ist, welcher zu vorgegebenen Zeitpunkten Signale erzeugt, die kurzzeitig einen oder mehrere der Teil-Regelsysteme (ABS/ASR, SDC,SLC,BFD) in einen definierten, den Fahrbetrieb des Fahrzeugs und die Fahrsicherheit nicht beeinträchtigenden Zustand versetzen,
und der die während dieses Zustandes ermittelten Sensorsignale und Signaländerungen zur Bestimmung von Fahrzeugdaten auswertet, diese Fahrzeugdaten in einem Speicher (RAM2) als aktualisierte Daten ablegt, wobei diese in die Signalauswertung durch den Zustandsbeobachter sowie in die durch die Teil-Regelsysteme (ABS/ASR, STC,SLC,BFD) ausgeführten Regelungen einbezogen werden.

2. Verbundregelsystem nach Anspruch 1, dadurch gekennzeichnet, daß eine Servolenkung, eine Regelung des Schräglaufwinkels der Räder und/oder eine Reifendrucküberwachung als weitere Teil-Regelsysteme in das Verbundregelsystem eingeschlossen sind.

3. Verbundregelsystem nach Anspruch 1 oder 2, dadurch gekennzeichnet, daß die Aktualisierung der in dem Speicher (RAM2) des Zustandsbeobachters abgelegten Fahrzeugdaten in Zeitabständen erfolgt, die wesentlich länger als die Abstände zwischen den Arbeitstakten der elektronischen Schaltkreise sind.

4. Verbundregelsystem nach einem oder mehreren der Ansprüche 1 - 3, dadurch gekennzeichnet, daß die Frequenz der durch die Fahrbahn angeregten Schwingung der Radaufhängung durch Bestimmung der Schwingungsfrequenz (w) des Schwingungsdämpfers (3) ermittelt wird, wobei die Radbeschleunigung (S̈_{z1}) mit Hilfe von Sensoren gemessen und aus den Abständen der Zeitpunkte, bei denen die die vertikale Radbeschleunigung (S̈_{z1}) gleich Null ist, die Anregungsfrequenz der Radaufhängung bestimmt wird.

5. Verbundregelsystem nach Anspruch 4, dadurch gekennzeichnet, daß in dem elektronischen Schaltkreis (SP2), der die Vertikalbeschleunigungen (S_{zi},S_{z2}) der Radaufhängung auswertet, ein 1-bit-Signal an den Zustandsbeobachter abgegeben wird, wenn für länger als die halbe Periodendauer der zuletzt ermittelten Anregungsfrequenz eine bestimmte extreme Stellung (S_{TP}) des Schwingungsdämpfers (3) sensiert wurde.

6. Verbundregelsystem nach einem oder mehreren der Ansprüche 1 - 5, dadurch gekennzeichnet, daß mit Hilfe eines oder mehrerer Schwingungsdämpfer (3), deren verschiedene Stellungen (S_{TP}) digital sensierbar sind, aus der Häufigkeitsverteilung der Stellungen (S_{TP}) in einem Zeitintervall die mittlere Höhe des Fahrzeugaufbaues über dem Boden ermittelt wird.

7. Verbundregelsystem nach einem oder mehreren der Ansprüche 1 - 6, dadurch gekennzeichnet, daß mit Hilfe eines oder mehrerer Schwingungsdämpfer (3), bei denen die Beschleunigung des Dämpferkolbens gegenüber dem zugehörigen Dämpferzylinder in einer bestimmten Stellung (S_{TP}) sensiert wird, und der zugehörigen elektronischen Schaltkreise, die Stellung (S_{TP}) des Schwingungsdämpfers (3) als Zeitfunktion berechnet wird.

8. Verbundregelsystem nach Anspruch 7, dadurch gekennzeichnet, daß die elektronischen Schaltkreise die Zeitfunktion der Stellungen (S_{TP}) des Schwingungsdämpfers (3) zeitlich mitteln, um den stationären Wert der Einfederung des Schwingungsdämpfers (3) zu ermitteln.

9. Verbundregelsystem nach Anspruch 7 oder 8, dadurch gekennzeichnet, daß die maximale Stellung (S_{TP}) des Schwingungsdämpfers (3) ermittelt und zur Berechnung einer gleitenden Mittelwertbildung von den elektronischen Schaltkreisen ausgewertet wird.

10. Verbundregelsystem nach einem oder mehreren der Ansprüche 1 - 9, dadurch gekennzeichnet, daß der Zustandsbeobachter folgende Elemente aufweist:
- einen inneren zentralen Controllerbus,
- einen internen, die internen Operationen steuernden Operationscontroller (STOBS 1) und einen externen, die Kommunikation mit den elektronischen Schaltkreisen der Teil-Regelsysteme (ABS/ASR, SDC, SLC) steuernden Operationscontroller (STOBS 2)
- mindestens ein RAM (RAM1, RAM2) als Datenpuffer und zum Ablegen der aktuellen Fahrzeugdaten,
- mindestens ein ROM (ROM2) für Fahrzeugbasisdaten, einfache Programme sowie eine Datenbank (ROM1) mit Expertenwissen und eine Einheit, die die Berechnung von Konstanten mit Hilfe eines einfachen Vier-Rad-Fahrzeug-Simulations-Modells ermöglicht.

## Claims

1. A compound control system for automotive vehicles which essentially consists of
sensors detecting states, velocities, vibration frequencies and/or accelerations (S_{T}p, _{VR1}...V_{R4}, _{W}, S̈_{z1},
S_{z2}) of vehicle parts and emitting electric signals, and of electronic circuits (SP1, SP2, SP3, SP4; LDC, LLC) evaluating the sensor signals and generating control signals for part control systems for anti-lock control and/or traction slip control (ABS/TSC), for vehicle level control (SLC) and/or suspension control (SDC) and, possibly, for further control circuits (BFD),
characterized in that a state observer is provided which receives signals from the sensors (_{VR1}..._{VR4}) and from the electronic circuits (SP1, SP2, SP3, SP4; LDC, LLC, SBA), evaluates them and emits signals to the electronic circuits (SP1, SP2, SP3, SP4; LDC, LLC) and which is designed as an interactive state observer, which at predetermined points of time, generates signals causing one or a plurality of the part control systems (ABS/TSC, SDC, SLC, BFD) to adopt for a short time a defined state which does not impair the driving operation of the vehicle nor driving safety, and which evaluates the sensor signals and signal variations obtained during this state to determine vehicle data, which files these vehicle data as actualized data in a memory (RAM2), these actualized data being taken into account in the signal evaluation by the state observer and in the control operations performed by the part control systems (ABS/TSC, STC, SLC, BFD).

2. A compound control system as claimed in claim 1,
characterized in that a power steering mechanism, a unit for controlling the oblique running angle of the wheels and/or a tire pressure monitor are included as further part control systems in the compound control system.

3. A compound control system as claimed in claim 1 or claim 2,
characterized in that the actualization of the vehicle data stored in the memory (RAM2) of the state observer takes place in time intervals which considerably exceed the intervals between the operating cycles of the electronic circuits.

4. A compound control system as claimed in one or in several of claims 1 through 3,
characterized in that the road excitation frequency of the wheel suspension is defined by determining the vibration frequency (w) of the vibration damper (3), the wheel acceleration (8_{z1}) being measured by means of sensors and the excitation frequency of the wheel suspension being determined from the intervals between the points of time when the vertical wheel acceleration (S̈_{z1}) is zero.

5. A compound control system as claimed in claim 4,
characterized in that in the electronic circuit (SP2) which evaluates the vertical accelerations (S_{zi}, S_{z2}) of the wheel suspension a 1-bit signal is emitted to the state observer if a certain extreme position (S_{TP}) of the vibration damper (3) has been sensed for a time longer than half the period duration of the excitation frequency determined last.

6. A compound control system as claimed in one or in several of claims 1 through 5,
characterized in that, by means of one or a plurality of vibration dampers (3) whose different positions (S_{TP}) can be sensed digitally, the average height of the vehicle body above the ground is determined from how frequently the positions (S_{TP}) occur within one time interval.

7. A compound control system as claimed in one or in several of claims 1 through 6,
characterized in that the position (S_{TP}) of the vibration damper (3) is computed as a function of time by means of one or a plurality of vibration dampers (3), for which the acceleration of the damper piston in relation to the associated damper cylinder is sensed in a defined position (S_{T}p), and by means of the associated electronic circuits.

8. A compound control system as claimed in claim 7,
characterized in that the electronic circuits form a time average of the time function of the positions (S_{TP}) of the vibration damper (3) in order to determine the stationary value of the compressive action of the vibration damper (3).

9. A compound control system as claimed in claim 7 or 8,
characterized in that the maximum position (S_{TP}) of the vibration damper (3) is determined and evaluated by the electronic circuits in order to calculate a sliding averaging.

10. A compound control system as claimed in one or several of claims 1 through 9,
characterized in that the state observer comprises the following elements:
- a central inner controller bus;
- an internal operation controller (STOBS 1) controlling the internal operations, and an external operation controller (STOBS 2) controlling the communication with the electronic circuits of the part control systems (ABS/TSC, SDC, SLC);
- at least one RAM (RAM1, RAM2) as data buffer and for filing the current vehicle data;
- at least one ROM (ROM2) for basic vehicle data, simple programs as well as a data bank (ROM1) with expert knowledge; and
- a unit enabling the calculation of constants by means of a simple four-wheel- vehicle simulation model.

## Revendications

1. Système de régulation composite, pour véhicule automobile, constitué essentiellement de capteurs, qui détectent des positions, vitesses, fréquences de vibrations et/ou accélérations (S_{TP}, V_{R1} ... V_{R4}, _{W}, S̈_{z1}, Sz2) de parties du véhicule et délivrent des signaux électriques, et de circuits électroniques (SP1, SP2, SP3, SP4 ; LDC, LLC) qui exploitent les signaux des capteurs et produisent des signaux de commande à destination de systèmes parties de régulation servant à la régulation antiblocage et/ou à la régulation du glissement de traction (ABS/ASR), à la régulation du niveau (SLC) du véhicule et/ou à la régulation (SDC) du châssis et éventuellement à destination d'autres circuits de régulation (BFD), caractérisé en ce qu'il est prévu un observateur d'état qui reçoit des signaux provenant des capteurs (_{VR1}, .... _{VR4}) et des circuits électroniques (SP1, SP2, SP3, SP4, LDC, LLC, SBA), les exploite et envoie des signaux aux circuits électroniques (SP1, SP2, SP3, SP4, LDC, LLC) et est agencé sous la forme d'un observateur d'état de type interactif qui, à des instants préfixés, produit des signaux qui font brièvement passer un ou plusieurs des systèmes partiels de régulation (ABS/ASR, SDC, SLC, BFD) dans un état défini ne nuisant pas à la conduite du véhicule et à la sécurité de marche et qui exploite les signaux de capteur et modifications de signal, communiqués pendant cet état, en vue de définir des données de véhicule, dépose ces données de véhicule dans une mémoire (RAM2) sous la forme de données actualisées et les intègre, tandis que ces dernières sont intégrées dans l'exploitation de signaux au moyen de l'observateur d'état, ainsi que dans les régulations exécutées au moyen des systèmes parties de régulation (ABS/ASR, STC, SLC, BFD).

2. Système de régulation composite suivant la revendication 1, caractérisé en ce qu'une direction assistée, une régulation de l'inclinaison de l'axe-pivot des roues et/ou une surveillance de la pression des pneumatiques sont intégrées dans le système de régulation composite en tant que systèmes parties de régulation supplémentaires.

3. Système de régulation composite suivant l'une des revendications 1 et 2, caractérisé en ce que l'actualisation des données de véhicule déposées dans la mémoire (RAM 2) de l'observateur d'état a lieu à des intervalles de temps qui sont notablement plus longs que les intervalles des cycles de fonctionnement des circuits électroniques.

4. Système de régulation composite suivant l'une des revendications 1 à 3, caractérisé en ce que la fréquence de l'oscillation de la suspension des roues qui est provoquée par la voie de roulement est établie au moyen d'une détermination de la fréquence (w) des vibrations de l'amortisseur de vibrations (3), tandis que l'accélération (8_{z1}) de la roue est mesurée au moyen de capteurs et la fréquence tants auxquels l'accélération verticale (S̈_{z1}) de la roue est nulle.

5. Système de régulation composite suivant la revendication 4, caractérisé en ce que, dans le circuit électronique (SP2) qui exploite les accélérations verticales (S_{zi}, S_{z2}) de la suspension de roue, un signal à 1 bit est envoyé à l'observateur d'état lorsqu'une position extrême (S_{TP}) déterminée de l'amortisseur de vibrations (3) est détectée pendant une durée supérieure à la demi-période de la fréquence d'activation d'abord déterminée.

6. Système de régulation composite suivant l'une des revendications 1 à 5, caractérisé en ce qu'au moyen d'un ou plusieurs amortisseurs de vibrations (3) dont différentes positions (S_{TP}) peuvent faire l'objet d'une détection numérique, la hauteur moyenne de la carrosserie du véhicule au-dessus du sol est déterminée à partir de la distribution de fréquence des positions (S_{TP}) à l'intérieur d'un intervalle de temps.

7. Système de régulation composite suivant l'une des revendications 1 à 6, caractérisé en ce qu'au moyen d'au moins d'un ou plusieurs amortisseurs de vibrations (3), dont l'accélération du piston d'amortisseur vis-à-vis du cylindre d'amortisseur associé est détectée dans une position (S_{TP}) déterminée, et au moyen du circuit électronique associé, la position (S_{TP}) de l'amortisseur de vibrations (3) est calculée en fonction du temps.

8. Système de régulation composite suivant la revendication 7, caractérisé en ce que les circuits électroniques font la moyenne dans le temps de la variation des positions (S_{TP}) de l'amortisseur de vibrations (3) en fonction du temps, afin de déterminer la valeur fixe du coefficient d'élasticité de l'amortisseur de vibrations (3).

9. Système de régulation composite suivant l'une des revendications 7 et 8, caractérisé en ce que la position maximale (S_{TP}) de l'amortisseur de vibrations (3) est déterminée et est exploitée par les circuits électroniques pour calculer la formation d'une valeur moyenne glissante.

10. Système de régulation composite suivant l'une des revendications 1 à 9, caractérisé en ce que l'observateur d'état comporte les éléments suivants :
- un bus central interne de contrôleur,
- un contrôleur opérationnel interne (STOBS 1) commandant les opérations internes et un contrôleur opérationnel externe (STOBS 2) commandant la communication avec les circuits électroniques des systèmes partiels de régulation (ABS/ASR, SDC, SLC),
- au moins une RAM (RAM1, RAM2) servant de tampon de données et destinée au dépôt des données de véhicule actuelles,
- au moins une ROM (ROM2) pour des données de base de véhicule, des programmes simples et une banque de données (ROM1) comportant des connaissances d'experts et
- une unité qui permet le calcul de constantes au moyen d'un modèle simple de simulation de véhicule à quatre roues.
